# FASCICULE DE BREVET EUROPEEN

(11) **EP 0 480 793 B1**
(45) Date de publication et mention de la délivrance du brevet: **23.08.1995**
(21) Numéro de dépôt: 91402580.4
(22) Date de dépôt: 26.09.1991
(51) Int. Cl.: B23K 26/12, B23K 26/00, G21C 3/10

(54) **Equipement et installation de soudage au laser de crayons combustibles ou analogues**
Vorrichtung und Installation zum Laserschweissen von Brennstäben oder dergleichen
Equipment and installation for laser welding of fuel rods or similar

(30) Priorité: 08.10.1990 FR 9012361
(43) Date de publication de la demande: 15.04.1992
(73) Titulaire: SOCIETE FRANCO-BELGE DE FABRICATION DE COMBUSTIBLES FBFC, F-92087 Paris La Défense (FR)
(72) Inventeur: Duthoo,Dominique, F-26100 Romans (FR)
(74) Mandataire: Jacobson, Claude

(56) Documents cités:
- GB-A- 2 070 998
- US-A- 4 727 237
- PATENT ABSTRACTS OF JAPAN vol. 4, no. 123 (M-29)(605) 30 Août 1980 & JP-A-55 081 096 ( TOKYO SHIUBAURA DENKI K.K. ) 18 Juin 1980

## Description

La présente invention est relative au soudage au laser, notamment des crayons combustibles ou analogues destinés à être utilisés dans les réacteurs nucléaires. Elle concerne plus particulièrement un équipement de soudage au laser du type comprenant une enceinte munie d'une fenêtre, un générateur laser et des moyens de transport du faisceau laser émis par ce générateur jusqu'à une zone de soudage à travers la fenêtre, ces moyens comprenant des éléments optiques dont au moins une lentille de focalisation et un miroir de renvoi. Par "crayons combustibles ou analogues", on entend les crayons combustibles, les tubes-guides et les crayons annexes.

Les crayons combustibles utilisés dans les réacteurs nucléaires sont constitués d'un tube de gainage en alliage de zirconium aux extrémités duquel sont emmanchés à force, puis soudés, des bouchons du même matériau, destinés à le fermer hermétiquement.

Les crayons contiennent un empilage de pastilles combustibles maintenues en appui contre l'un des bouchons (dit bouchon inférieur) à l'aide d'un ressort comprimé entre la colonne fissile et le bouchon opposé (bouchon supérieur). Le bouchon supérieur comporte un orifice de petit diamètre permettant de pressuriser le crayon combustible avant de boucher ce trou par soudage, cette opération étant souvent appelée "queusotage".

La longueur d'un crayon combustible est de l'ordre de 4 mètres et son diamètre d'environ 10 mm pour une épaisseur d'environ 0,6 mm.

Les tubes-guides sont constitués d'un tube en alliage de zirconium aux extrémités duquel sont emmanchés, puis soudés, un bouchon (extrémité inférieure) et un manchon (extrémité supérieure).

Le tube-guide, d'une épaisseur d'environ 0,5 mm, a un diamètre de l'ordre de 12 mm au niveau du bouchon et de 14 mm au niveau du manchon, pour une longueur d'environ 4 mètres.

Les crayons annexes comportent un tube de gainage en acier inoxydable d'une longueur d'environ 4 mètres pour un diamètre de l'ordre de 10 mm et une épaisseur d'environ 0,4 mm, aux extrémités duquel sont emmanchés, puis soudés, deux bouchons du même matériau, destinés à le fermer hermétiquement.

Ils ne sont pas pressurisés et, comme les tubes-guides, ne comportent donc que deux soudures circulaires.

Ainsi, les crayons combustibles ou analogues doivent subir deux opérations de soudage circulaire, et éventuellement un soudage ponctuel pour le queusotage. Pour les composants en alliage de zirconium, ces soudures doivent être réalisées en enceinte, sous protection de gaz neutre pour éviter toute oxydation du métal fondu.

Les soudures circulaires doivent avoir une pénétration supérieure ou égale à l'épaisseur de la gaine, une largeur en surface n'excédant pas 1,5 mm et une largeur aussi importante que possible au droit de l'interface bouchon-gaine ou manchon-gaine (diamètre d'emmanchement).

Compte tenu de l'utilisation des crayons combustibles ou analogues et du degré de qualité requis, aucun défaut du type fissure ou manque de pénétration n'est admis.

Les soudures de queusot sont réalisées en atmosphère d'hélium hyperbare et consistent à effondrer les bords d'un orifice de petit diamètre (typiquement inférieur à 0,8 mm). Leur pénétration doit être supérieure ou égale à l'épaisseur de la gaîne avec un niveau de garantie important.

Pour atteindre ces objectifs, le principe d'équipements de soudage au laser a été posé (voir par exemple le GB-A-2 070 998 ou le FR-A-2 305 827), sans qu'une technologie concrète soit décrite.

L'invention a pour but de fournir un équipement capable de réaliser dans des conditions industrielles les soudures des crayons combustibles ou analogues.

A cet effet, l'invention a pour objet un équipement de soudage au laser du type précité, caractérisé en ce que le miroir de renvoi est partiellement transparent au faisceau laser et lesdits éléments optiques sont montés rigidement dans un boîtier qui présente une branche d'entrée du faisceau laser, une branche de sortie fixée rigidement à l'enceinte autour de la fenêtre de celle-ci, et une branche opposée à la branche d'entrée et équipée d'un détecteur d'énergie lumineuse.

Suivant d'autres caractéristiques de l'invention :
- un hublot est monté dans le boîtier, et ce boîtier comporte une entrée de gaz débouchant dans un espace de la branche de sortie qui communique avec l'espace intérieur de l'enceinte à travers ladite fenêtre;
- le hublot est monté dans la branche de sortie du boîtier, l'entrée de gaz débouchant juste sous ce hublot et l'enceinte comportant un passage de fuite de gaz;
- le hublot est précédé d'une lentille de focalisation montée dans la branche de sortie;
- une lentille collimatrice est montée dans la branche d'entrée du boîtier;
- des lentilles collimatrice et de focalisation encadrent le hublot et sont montées dans la branche d'entrée du boîtier;
- le miroir de renvoi est transparent à la lumière visible, et une branche du boîtier opposée à ladite branche de sortie est équipée d'une caméra;
- lesdits moyens de transport comprennent une fibre optique qui se termine dans la branche d'entrée du boîtier, le générateur laser étant du type YAG pulsé;
- lorsque l'équipement est destiné au soudage au laser de crayons combustibles ou analogues, l'enceinte comporte des moyens de positionnement, et éventuellement d'entraînement en rotation, d'un crayon combustible;
- la branche de sortie du boîtier est fixée rigidement à l'enceinte, directement ou avec interposition d'une vanne d'isolement.

L'invention a également pour objet une installation de soudage au laser, notamment de crayons combustibles ou analogues, qui comprend plusieurs équipements tels que définis ci-dessus, avec un générateur laser unique et des moyens de commutation de ce générateur laser sur l'une quelconque de plusieurs fibres optiques appartenant chacune à l'un de ces équipements.

Pour le soudage de crayons combustibles ou analogues lesdits équipements peuvent, en particulier, comprendre au moins un équipement de soudage de bouchon inférieur, un équipement de soudage de bouchon supérieur et un équipement de queusotage.

Des exemples de réalisation de l'invention vont maintenant être décrits en regard des dessins annexés, sur lesquels :
- la Figure 1 représente en coupe longitudinale une partie d'un équipement de soudage laser conforme à l'invention;
- la Figure 2 est une vue analogue d'une variante; et
- la Figure 3 représente en coupe un équipement de queusotage conforme à l'invention.

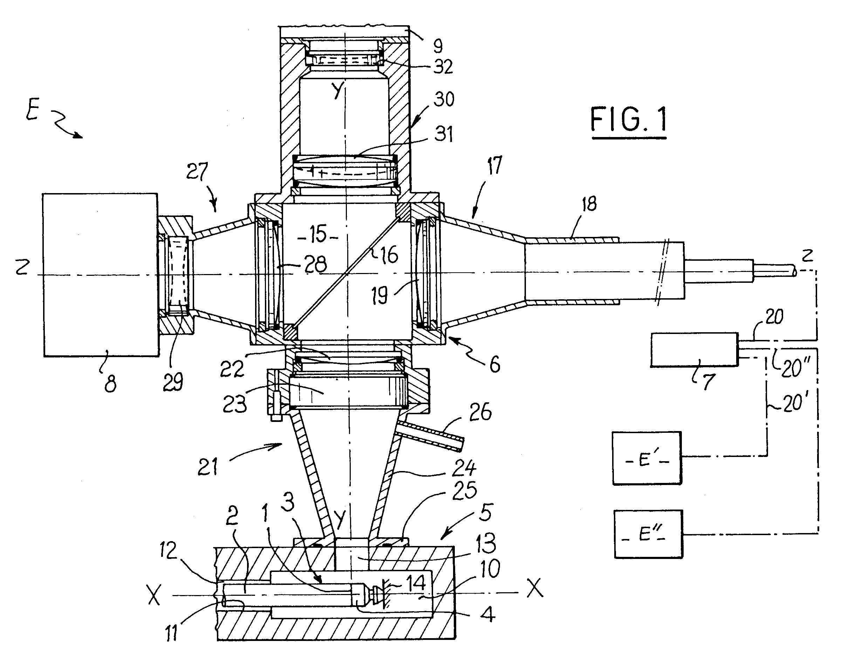

L'équipement de soudage laser pour le soudage de crayons combustibles ou analogues représenté à la Figure 1 est destiné à réaliser une soudure circulaire au joint 1 entre la gaîne 2 d'un crayon combustible 3 et un bouchon 4 emmanché à une extrémité de celle-ci. Cet équipement comprend essentiellement une enceinte 5, un boîtier 6, un générateur laser YAG pulsé 7 d'une puissance de 400 W, un détecteur d'énergie ou de puissance 8 intégrant le signal sur toute la durée du signal, et une caméra 9.

L'enceinte 5 comporte une cavité 10 d'axe X-X supposé horizontal, dans laquelle le crayon 3 peut être introduit à travers un passage 11 ménageant un jeu annulaire calibré 12 autour de la gaîne 2, et elle présente une ouverture latérale 13 formant fenêtre. Lorsque le bouchon 4 du crayon 3 est en contact avec une butée 14 prévue dans la cavité 10, le plan du joint 1 contient l'axe Y-Y, supposé vertical, de l'ouverture 13.

Le boîtier 6, supposé disposé au-dessus de l'enceinte 5, comprend un corps central parallélépipédique 15 dans lequel est monté un miroir de renvoi 16 incliné à 45°. Ce boîtier est ouvert sur quatre faces successives, d'où partent quatre branches:
- une branche d'entrée 17 d'axe Z-Z parallèle à l'axe X-X, comprenant un support tubulaire 18 et une lentille collimatrice 19 adjacente au corps 15. Une fibre optique 20 partant du générateur laser 7 se termine dans le support 18, où son extrémité est positionnée suivant l'axe Z-Z;
- une branche de sortie 21 d'axe Y-Y comprenant successivement, à partir du corps 15, une lentille de focalisation 22, un hublot 23 et une manchette 24 dont l'ouverture d'extrémité communique avec l'ouverture 13 de l'enceinte 5, une fixation étanche étant réalisée autour de cette ouverture au moyen d'une bride d'extrémité 25 de la manchette. Le hublot 23 est monté à joint étanche entre deux brides de la branche 21 assemblées l'une à l'autre, et une conduite 26 d'amenée de gaz de protection inerte débouche dans la manchette 24, juste au-dessous de ce hublot, tandis que l'évacuation du gaz s'effectue à travers le jeu 12 précité;
- une branche 27 de contrôle de faisceau laser, d'axe Z-Z, située à l'opposé de la branche 17. Cette branche 27 comporte des lentilles optiques convergente 28 et divergente 29, permettant d'adapter le diamètre du faisceau à la dimension du détecteur 8, ce dernier étant fixé à l'extrémité de la branche 27; et
- une branche 30 de contrôle visuel, d'axe Y-Y, située à l'opposé de la branche 21. Cette branche 30 comporte des lentilles optiques convergente 31 et divergente 32, permettant d'adapter le diamètre de la lentille de focalisation du faisceau à l'objectif de la caméra 9, et cette dernière est fixée à l'extrémité de la branche 30.

Le miroir 16 est un miroir dichroîque qui réfléchit la majorité (par exemple 97%) du faisceau laser incident (λ = 1,06 micron) et en laisse passer une petite fraction vers le détecteur 8. De plus, ce miroir est transparent à la lumière visible, ce qui permet à la caméra 9 de surveiller par visée reflex le crayon 3 à travers les lentilles 32, 31 et 22, le miroir 16, le hublot 23 et l'ouverture 13.

En fonctionnement, un crayon combustible 3 est introduit dans l'enceinte 5 jusqu'au contact de la butée 14. Il est alors entraîné en rotation autour de son axe X-X par des moyens non représentés, et le gaz de protection inerte est introduit dans l'enceinte via la conduite 26, la manchette 24 et l'ouverture 13. Après une période de balayage du gaz de protection, le faisceau laser pulsé est envoyé via la fibre optique, collimaté par la lentille 19, réfléchi par le miroir 16 et focalisé par la lentille 22 sur le joint 1.

La rigidité de tout l'équipement, constitué d'éléments métalliques fixés rigidement les uns sur les autres et comprenant des éléments optiques fixés rigidement dans le boîtier 6, assure une excellente focalisation du faisceau, indéréglable, à l'emplacement de la soudure et une qualité élevée et bien reproductible des soudures. L'équipement est cependant démontable et permet une maintenance aisée, et notamment un démontage et un entretien faciles du hublot 23. De plus, l'arrivée de gaz juste au-dessous du hublot 23 protège efficacement celui-ci des fumées dues au soudage, lesquelles sont entraînées par le gaz, via le jeu 12, à l'extérieur de l'enceinte.

Lorsque la soudure circulaire est terminée et que le crayon est refroidi, le débit de gaz de protection est réduit, ce qui permet de conserver l'enceinte sous atmosphère inerte, et le crayon est extrait de l'enceinte 5 puis remplacé par un autre crayon à souder.

Le détecteur 8 permet de surveiller le faisceau laser, et par exemple de déclencher une alarme en cas de détérioriation d'un composant optique ou d'un dysfonctionnement du générateur laser. La caméra 9 permet de vérifier le positionnement du crayon dans l'enceinte 5 et, éventuellement, de déclencher également une alarme.

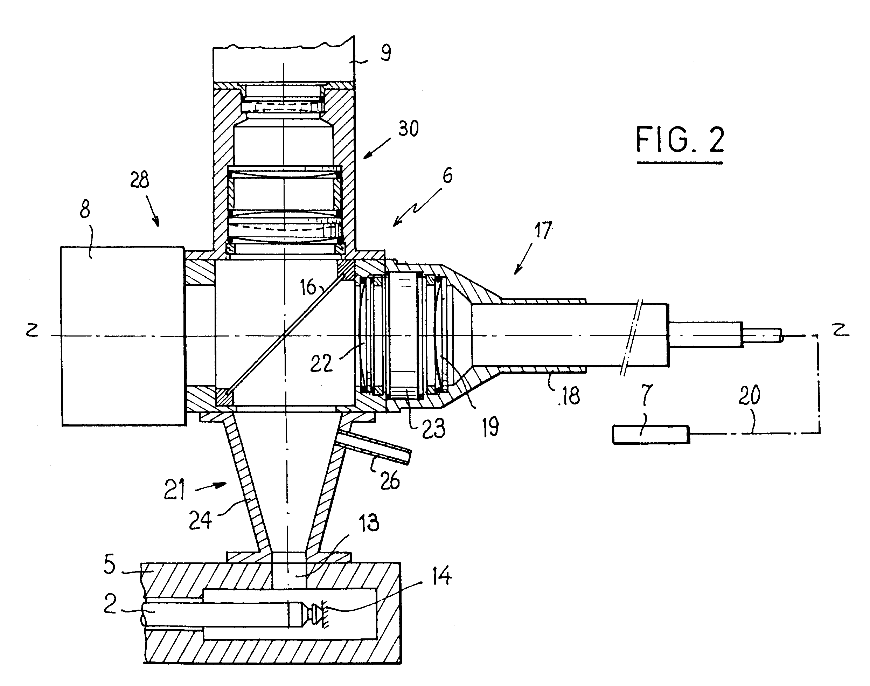

La variante de la Figure 2 diffère de celle de la Figure 1 par le fait que le hublot 23 et la lentille de focalisation 22 sont reportés dans la branche 17 du boîtier 6. Ainsi, cette branche comporte, à partir du corps central 15, la lentille 22, le hublot 23 et la lentille 19, et l'intérieur de la manchette 24 communique directement avec l'intérieur du corps 15.

L'avantage de cette variante de la Figure 2 réside dans le fait que le détecteur 8, qui n'a plus besoin de ses propres lentilles de focalisation, mesure directement l'énergie laser réellement transmise au crayon combustible. Par conséquent, la fiabilité de la mesure permet de mieux garantir l'énergie de soudage fournie au crayon combustible.

Comme illustré schématiquement à la Fig.1, l'installation comprend avantageusement plusieurs équipements en parallèle E, E', E'' et un générateur laser 7 unique. Ce dernier, grâce à des moyens de commutation appropriés, envoie le faisceau laser successivement dans les fibres optiques 20, 20', 20'' associées aux divers équipements, de sorte qu'un équipement réalise une soudure pendant que dans les autres se déroulent les phases annexes décrites plus haut. On obtient ainsi une installation à haute productivité.

Ainsi, dans une installation de soudage de crayons combustibles, certains équipements peuvent être affectés au soudage des bouchons inférieurs, d'autres au soudage des bouchons supérieurs, et d'autres encore au queusotage, et être adaptés à chacune de ces opérations. Ainsi, dans le cas du queusotage, l'argon est remplacé par de l'hélium sous pression, et l'enceinte est modifiée de façon que la fenêtre d'entrée du faisceau se trouve en regard du trou de queusot à boucher. L'enceinte de queusotage a un volume très réduit et est dépourvue de moyens d'entraînement en rotation du crayon.

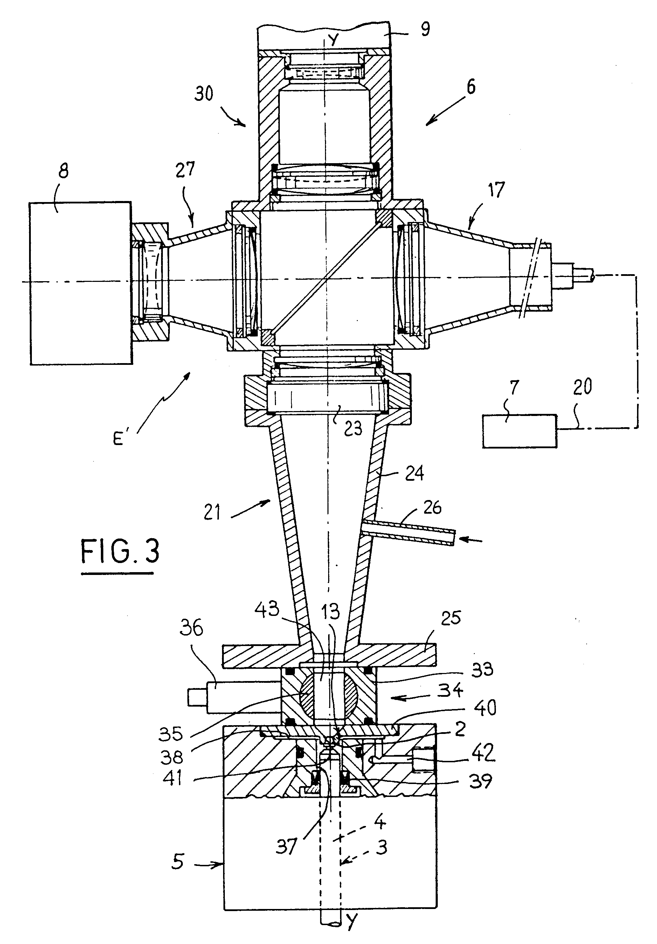

On a représenté à la Fig.3 un équipement E' de queusotage. Le boîtier 6 est analogue à celui de la Fig.1, à ceci près que la conduite 26 est reliée à une source d'hélium sous environ 30 bars. La bride 25 de ce boîtier s'applique à joint étanche sur l'enceinte 5 par l'intermédiaire du corps parallélépipédique 33 d'une vanne d'arrêt 34 à boisseau sphérique 35 et à tige d'actionnement rotative 36.

L'enceinte 5, de même axe général Y-Y que la manchette 24, comporte, du côté du boîtier 6, un passage cylindrique 37 débouchant dans un lamage étagé 38 ouvert vers le haut. Le passage 37 est muni, à une petite distance de ce lamage, d'un joint d'étanchéité annulaire 39 du type à lèvres.

Une plaque d'appui 40 est fixée de façon étanche dans la partie extérieure, de plus grand diamètre, du lamage 38. Cette plaque comporte en son centre la fenêtre 13 de l'enceinte, de forme convergente-divergente. La partie interne 41 de cette fenêtre forme un siège conjugué du bouchon 4 des crayons combustibles comportant le trou de queusot central à obturer, ces bouchons ayant une forme tronconique.

Un conduit 42 de l'enceinte 5 débouchant dans la partie interne du lamage 38 peut, au moyen d'un distributeur non représenté, être relié sélectivement à une source d'hélium sous une pression légèrement supérieure à la pression atmosphérique, à une pompe à vide ou à l'air libre, ou encore être fermé.

En service, la vanne 34 étant fermée et en l'absence de tout crayon, l'enceinte 5 est soumise à un balayage d'hélium basse pression via le conduit 42, le lamage 38 et le passage 37. Un crayon combustible 3 est introduit dans le passage 37, à travers le joint 39, jusqu'à appui de son bouchon 4 sur le siège 41, puis maintenu par des moyens de serrage (non représentés) dont est munie l'enceinte. Le conduit 42 est relié à la pompe à vide pour évacuer l'air contenu dans le crayon 3, puis fermé, cette phase d'évacuation étant d'ailleurs optionnelle.

La vanne 35 est ouverte, ce qui emplit le crayon d'hélium sous environ 30 bars et offre un passage pour le faisceau laser, à travers le passage cylindrique 43 du boisseau, jusqu'au trou de queusot. La fermeture du trou de queusot est alors effectuée, la vanne 34 est refermée, le conduit 42 est mis à l'atmosphère, le crayon 3 est évacué et le balayage de l'enceinte à l'hélium par le circuit basse pression est rétabli.

Grâce à l'agencement décrit comportant la vanne 34 entre le boîtier et l'enceinte, le volume mort d'hélium sous pression entourant le bouchon 4 et la partie adjacente du crayon est réduit au strict minimum, et il en est de même de la consommation d'hélium de l'installation.

On comprend que l'installation suivant l'invention peut comprendre un nombre quelconque d'équipements de soudage au laser, pour une utilistion optimale du générateur laser, et s'appliquer au soudage de haute qualité de différents types de pièces industrielles.

Par ailleurs, l'un des équipements peut aussi servir à percer les trous de queusot.

## Revendications

1. Equipement de soudage au laser de crayons combustibles ou analogues destinés à être utilisés dans les réacteurs nucléaires et/ou de perçage au laser de trous de queusot dans ceux-ci, du type comprenant une enceinte (5) munie d'une fenêtre (13), un générateur laser (7) et des moyens (16, 19, 20, 22) de transport du faisceau laser émis par ce générateur jusqu'à une zone de soudage (1) à travers la fenêtre, ces moyens comprenant des éléments optiques (16, 19, 22) dont au moins une lentille (22) de focalisation et un miroir de renvoi (16), caractérisé en ce que le miroir de renvoi (16) est partiellement transparent au faisceau laser, en ce que lesdits éléments optiques sont montés rigidement dans un boîtier rigide (6) qui présente une branche (17) d'entrée du faisceau laser, une branche (21) de sortie fixée rigidement à l'enceinte (5) autour de la fenêtre (13) de celle-ci, et une branche (28) opposée à la branche d'entrée (17) et équipée d'un détecteur d'énergie lumineuse (8), et en ce que l'enceinte (5) comporte des moyens de positionnement, et éventuellement d'entraînement en rotation, d'un crayon combustible.

2. Equipement suivant la revendication 1, caractérisé en ce qu'un hublot (23) est monté dans le boîtier (6), et en ce que ce boîtier comporte une entrée de gaz (26) débouchant dans un espace de la branche de sortie (21) qui communique avec l'espace intérieur de l'enceinte (5) à travers ladite fenêtre (13).

3. Equipement suivant la revendication 2, caractérisé en ce que le hublot (23) est monté dans la branche de sortie (21) du boîtier (6), l'entrée de gaz (26) débouchant juste sous ce hublot et l'enceinte (5) comportant un passage de fuite de gaz (12).

4. Equipement suivant la revendication 3, caractérisé en ce que le hublot (23) est précédé d'une lentille de focalisation (22) montée dans la branche de sortie (21).

5. Equipement suivant la revendication 4, caractérisé en ce qu'une lentille collimatrice (19) est montée dans la branche d'entrée (17) du boîtier (6).

6. Equipement suivant la revendication 2, caractérisé en ce que des lentilles collimatrice (19) et de focalisation (22) encadrent le hublot (23) et sont montées dans la branche d'entrée (17) du boîtier (6).

7. Equipement suivant l'une quelconque des revendications 5 ou 6, caractérisé en ce que le miroir de renvoi (16) est transparent à la lumière visible, et en ce qu'une branche (30) du boîtier (6) opposée à ladite branche de sortie (21) est équipée d'une caméra (9).

8. Equipement suivant l'une quelconque des revendications 1 à 7, caractérisé en ce que lesdits moyens de transport comprennent une fibre optique (20) qui se termine dans la branche d'entrée (17) du boîtier (6), le générateur laser (7) étant du type YAG, pulsé.

9. Equipement suivant l'une quelconque des revendications 1 à 8, caractérisé en ce que la branche de sortie (21) du boîtier (6) est directement fixée rigidement à l'enceinte (5).

10. Equipement suivant l'une quelconque des revendications 1 à 8, caractérisé en ce que la branche de sortie (21) du boîtier (6) est fixée rigidement à l'enceinte (5) avec interposition d'une vanne d'isolement (34).

11. Installation de soudage au laser de crayons combustibles ou analogues destinés à être utilisés dans les réacteurs nucléaires et/ou de perçage au laser de trous de queusot dans ceux-ci, caractérisée en ce qu'elle comprend plusieurs équipements suivant la revendication 8, avec un générateur laser (7) unique et des moyens de commutation de ce générateur laser sur l'une quelconque de plusieurs fibres optiques (20, 20A, 20B) appartenant chacune à l'un de ces équipements.

12. Installation suivant la revendication 11, caractérisée en ce que lesdits équipements comprennent au moins un équipement de soudage de bouchon inférieur, un équipement de soudage de bouchon supérieur et un équipement de queusotage.

## Claims

1. Equipment for laser welding fuel rods or the like intended to be used in nuclear reactors or for laser drilling closure holes therein, of the type comprising an enclosure (5) provided with a window (13), a laser generator (7) and means (16, 19, 20, 22) for transmitting the laser beam emitted by this generator to a welding zone (1) through the window, these means comprising optical elements (16, 19, 22) including at least one focusing legs (22) and a reflecting mirror (16), characterised in that the reflecting mirror (16) is partially transparent to the laser beam, in that the optical elements are rigidly mounted in a rigid housing (6) which has an inlet branch (17) for the laser beam, an outlet branch (21) rigidly fixed to the enclosure (5) around the window (13) thereof, and a branch (28) located opposite the inlet branch (17) and equipped with a light energy detector (8), and in that the enclosure (5) comprises means for positioning and possibly for rotationally driving a fuel rod.

2. Equipment according to claim 1, characterised in that a porthole (23) is mounted in the housing (6) and in that this housing has a gas inlet (26) opening into a space of the outlet branch (21) which communicates with the inner space of the enclosure (5) through said window (13).

3. Equipment according to claim 2, characterised in that the porthole (23) is mounted in the outlet branch (21) of the housing (6), the gas inlet (26) opening just below this porthole and the enclosure (5) having a gas escape passage (12).

4. Equipment according to claim 3, characterised in that the porthole (23) is preceded by a focusing lens (22) mounted in the outlet branch (21).

5. Equipment according to claim 4, characterised in that a collimating lens (19) is mounted in the inlet branch (17) of the housing (6).

6. Equipment according to claim 2, characterised in that collimating (19) and focusing lenses (22) surround the porthole (23) and are mounted in the inlet branch (17) of the housing (6).

7. Equipment according to either of claims 5 and 6, characterised in that the reflecting mirror (16) is transparent to visible light, and in that a branch (30) of the housing (6) located opposite said outlet branch (21) is equipped with a camera (9).

8. Equipment according to any one of claims 1 to 7, characterised in that said transmitting means comprise an optical fibre (20) which terminates in the inlet branch (17) of the housing (6), the laser generator (7) being of the pulsed YAG type.

9. Equipment according to any one of clams 1 to 8, characterised in that the outlet branch (21) of the housing (6) is rigidly fixed directly to the enclosure (5).

10. Equipment according to any one of claims 1 to 8, characterised in that the outlet branch (21) of the housing (6) is rigidly fixed to the enclosure (5) via an interposed isolation valve (34).

11. Installation for the laser welding of fuel rods or the like intended to be used in nuclear reactors and/or for laser drilling of closure holes therein, characterised in that it comprises numerous pieces of equipment according to claim 8, with a single laser generator (7) and means for switching this laser generator to any one of a number of optical fibres (20, 20A, 20B) each belonging to one of these pieces of equipment.

12. Installation according to claim 11, characterised in that the said pieces of equipment comprise at least one apparatus for welding the lower stopper, an apparatus for welding the upper stopper and a closure apparatus.

## Patentansprüche

1. Einrichtung zum Laserschweißen von Brennstäben u.ä., die zur Verwendung in Atomreaktoren bestimmt sind, und/oder zum Laserbohren von Löchern zum Unterdrucksetzen in dieselben mit einer Einfassung (5), die mit einem Fenster (13) versehen ist, einer Einrichtung (7) zur Erzeugung eines Laserstrahles und Einrichtungen (16, 19, 20, 22) zur Führung des von der Einrichtung abgegebenen Laserstrahles bis zu einer Schweißzone (1) quer über das Fenster, wobei die Einrichtungen zum Führen optische Elemente (16, 19, 22) aufweisen, die mindestens eine Fokussierlinse (22) und einen Reflektionsspiegel (16) besitzen, dadurch gekennzeichnet, daß der Reflektionsspiegel (16) in bezug auf den Laserstrahl teilweise transparent ist, daß die optischen Elemente starr in einem starren Gehäuse (6) montiert sind, das einen Eintrittsabschnitt (17) für den Laserstrahl, einen Austrittsabschnitt (21), der starr an der Einfassung (5) um das Fenster (13) derselben herum fixiert ist, und einen dem Eintrittsabschnitt (17) gegenüberliegenden Abschnitt (28) aufweist, der mit einem Detektor (8) für die abgegebene Lichtmenge versehen ist, und daß die Einfassung (5) Einrichtungen zur Positionierung und gegebenenfalls zum drehbaren Antreiben eines Brennstabes aufweist.

2. Einrichtung nach Anspruch 1, dadurch gekennzeichnet, daß ein Abschirmfenster (23) im Gehäuse (6) montiert ist und daß das Gehäuse einen Gaseinlaß (26) aufweist, der in einen Raum des Austrittabschnittes (21) mündet, welcher über das Fenster (13) mit dem Innenraum der Einfassung (5) in Verbindung steht.

3. Einrichtung nach Anspruch 2, dadurch gekennzeichnet, daß das Abschirmfenster (23) im Austrittsabschnitt (21) des Gehäuses (6) montiert ist, daß der Gaseinlaß (26) unmittelbar unter dem Abschirmfenster mündet und daß die Einfassung (5) einen Kanal zum Entweichen des Gases (12) aufweist.

4. Einrichtung nach Anspruch 3, dadurch gekennzeichnet, daß vor dem Abschirmfenster (23) eine Fokussierlinse (22) angeordnet ist, die im Austrittsabschnitt (21) montiert ist.

5. Einrichtung nach Anspruch 4, dadurch gekennzeichnet, daß eine Kollimationslinse (19) im Eintrittsabschnitt (17) des Gehäuses (6) montiert ist.

6. Einrichtung nach Anspruch 2, dadurch gekennzeichnet, daß die Kollimationslinse (19) und die Fokussierlinse (22) das Abschirmfenster (23) einrahmen und im Eintrittsabschnitt (17) des Gehäuses (6) montiert sind.

7. Einrichtung nach einem der Ansprüche 5 oder 6, dadurch gekennzeichnet, daß der Reflektionsspiegel (16) gegenüber sichtbarem Licht transparent ist und daß ein Abschnitt (30) des Gehäuses (6), der dem Austrittsabschnitt (21) gegenüberliegt, mit einer Kamera (9) versehen ist.

8. Einrichtung nach einem der Ansprüche 1 bis 7, dadurch gekennzeichnet, daß die Einrichtungen zum Führen eine Lichtleitfaser (20) aufweisen, die im Eintrittsabschnitt (17) des Gehäuses (6) endet, und daß die Einrichtung (7) zur Erzeugung eines Laserstrahles ein gepulster YAG-Laser ist.

9. Einrichtung nach einem der Ansprüche 1 bis 8, dadurch gekennzeichnet, daß der Austrittsabschnitt (21) des Gehäuses (6) direkt starr an der Einfassung (5) fixiert ist.

10. Einrichtung nach einem der Ansprüche 1 bis 8, dadurch gekennzeichnet, daß der Austrittsabschnitt (21) des Gehäuses (6) starr an der Einfassung (5) fixiert ist, wobei dazwischen ein Isolationsschieber (34) angeordnet ist.

11. Anlage zum Laserschweißen von Brennstäben u.ä., die zur Verwendung in Atomreaktoren bestimmt sind, und/oder zum Laserbohren von Löchern zum Unterdrucksetzen in dieselben, dadurch gekennzeichnet, daß sie mehrere Einrichtungen gemäß Anspruch 8 aufweist mit einer einzigen Einrichtung (7) zur Erzeugung eines Laserstrahles und mit Schalteinrichtungen für die Einrichtung zur Erzeugung des Laserstrahles auf eine von mehreren Lichtleitfasern (20, 20A, 20B), die zu jeder Einrichtung gehören.

12. Anlage nach Anspruch 11, dadurch gekennzeichnet, daß die Einrichtungen mindestens eine Schweißeinrichtung für einen unteren Stopfen eine Schweißeinrichtung für einen oberen Stopfen und eine Einrichtung zum Unterdrucksetzen umfassen.
